# EUROPEAN PATENT SPECIFICATION

(11) **EP 1 360 846 B1**
(45) Date of publication and mention of the grant of the patent: **20.10.2004**
(21) Application number: 02803418.9
(22) Date of filing: 20.11.2002
(51) Int. Cl.: H04Q 3/00

(54) **PORTABILITY OF A SUBSCRIBER ID**
PORTABILITÄT EINER TEILNEHMER-ID
TRANSFERABILITE D'UNE IDENTIFICATION D'UN ABONNE

(30) Priority: 22.11.2001 FI 20015039
(43) Date of publication of application: 12.11.2003
(73) Proprietor: TeliaSonera Finland Oyj, 00510 Helsinki (FI)
(72) Inventor: KORHONEN, Jouni, FIN-11100 Riihimäki (FI)
(74) Representative: Virkkala, Jukka Antero
(86) International application number: PCT/FI2002/000932
(87) International publication number: WO 2003/045074

(56) References cited:
- EP-A1- 0 915 626
- EP-A2- 0 936 822
- US-A- 4 933 967

## Description

### BACKGROUND OF THE INVENTION

The invention relates to portability of subscriber IDs when a subscriber changes operators. To give a concrete example, the invention is presented in a situation where the subscriber's telephone number is of the form E.164. Another possible form is E.212. So called Enum-DNS name servers are known in the field, "Enum" being an abbreviation meaning a number of the form E.164 or E.212, and DNS being a domain name server. The most important abbreviations are listed at the end of the specification. Enum-DNS name servers are used to map E.164/212 numbers to names of the form SIP or FQDN. Authorities controlling telecommunications networks will require portability of subscriber IDs (numbers etc.) to enable competition between operators in such a way that subscribers can keep their established telephone numbers. Important environments where the invention could be utilized include the MMS (Multimedia Messaging) environment of the 3GPP, other operation relating to subscriber ID routing within the 3GPP architecture and a core network between mobile operators, i.e. an interconnection network, for example GRX (GPRS Roaming exchange).

Document EP-A-0 915 626 discloses a method and apparatus for mapping a user ID and an IP address for providing a service in a data network. However, this document is not concerned with the problem of portability of an ID.

The problem behind the invention is as follows. Let us assume that subscriber X has originally been operator A's client and received his/her telephone number (MSISDN) from the operator A's number space. Later, subscriber X changes operators and becomes operator B's client but wishes to keep the original telephone number. Now, however, Enum-DNS routes subscriber X's DNS queries according to the prefix of the E.164 number to operator A's name server (assuming that some kind of hierarchy is used in the DNS), although X is operator B's client. Operator A should be able to command the name server serving X's terminal to communicate with operator B's Enum-DNS server.

In other words, the problem behind the invention is how to route the Enum-DNS queries to the correct operator, although the subscriber has changed operators and his/her telephone number has remained unchanged.

### BRIEF DESCRIPTION OF THE INVENTION

An object of the invention is thus to provide a technique for mapping the subsriber ID relating to a subscriber from a first form (e.g. E.164/212) to a second form (SIP, HTTP, e-mail, URL, NAI, FQDN etc.) when the subscriber ID in the first form has been allocated from the ID space of a first network, the subscriber being a subscriber of a second network and roaming in a third network. Each network comprises at least one name server, and the operators' networks are connected by a core network having a root server.

The object of the invention is achieved with a method and a system that are characterized in what is stated in the independent claims. Preferred embodiments of the invention are described in the dependent claims.

The invention can be implemented in the following way, for instance. The name server of the third network, i.e. the visited network, receives a query concerning a second form of a subscriber ID, containing or expressing the first form of the subscriber ID. The name server of the third network sends the query concerning the second form of the subscriber ID to the root server. The root server deduces the name server of the first network from the first form of the subscriber ID and starts a process which results in the query concerning the second form of the subscriber ID being transmitted to the name server of the first network. The name server of the first network starts a process which results in at least the domain address of the second network being transmitted to the name server of the third network. The name server of the third network sends a query to the name server of the second network on the basis of the domain address of the second network and receives a subscriber identity of the second form from the name server of the second network.

In the above example, the query was started from the name server of the network that had been visited, but it can also be sent by another type of server in the visited network.

The expression "Y starts a process which results in --- being transmitted to W" used twice above can, at its simplest, mean "Y sends --- to W", but the data to be sent can also be transferred indirectly, for example through the core network or as a result of a recursive query, whereby Y sends a query to the first name server, which sends the query to the next name server, and the name server that can reply to the query replies to Y.

The invention enables distributed Enum-DNS-based resolving of subscriber IDs, such as E.164 numbers, without centralized data warehouses or changes in the DNS data elsewhere. There is no need to make any changes in the core network between the operators or in the root server. Functional changes are confined to operators' own name servers that must be able to support the functionality according to the invention in a situation where the subscriber has changed operators. The subscriber data must naturally be updated in the databases of the subscriber's new and old operator. Generally speaking, the invention enables number portability in the MMS and UMTS environments utilizing name service of the Enum-DNS type.

### BRIEF DESCRIPTION OF THE FIGURES

The invention will now be described in greater detail in connection with preferred embodiments, with reference to the attached drawings, of which

Figure 1 is a system and signalling diagram illustrating an embodiment of the invention; and

Figure 2 is a signalling diagram comprising, in addition to name servers, also two SIP servers.

### DETAILED DESCRIPTION OF THE INVENTION

In the following, embodiments of the invention are explained using protocols and techniques described in the following documents as examples:
- Enum-DNS (RFC2916)
- NAPTR DNS Resource Record (RR) (RFC2915)
- SRV Resource Record (RFC2782).

In accordance with a preferred embodiment of the invention, two new "Specification of Service" specifiers and one "Protocol" specification are defined for the NAPTR. It is to be noted that the NAPTR examples presented below are only illustrative, in other words not limiting examples, because the names of the specifiers and specifications may change as the standardization changes.

NAPTR protocol (Naming Authority Pointer):
- ns: Name Server - DNS returns an unambiguous domain name which should be queried about name servers responsible for the particular domain.

NAPTR Service Specifications:
- E2R: E.164 to Resource - DNS returns a name in the SRV form, which name can be queried about name servers responsible for the E.164 number.
- E2D: E 164 to Domain - DNS returns a unambiguous domain name, which can be queried about name servers responsible for the E.164 number.

NAPTR examples:

The first example is from the NAPTR RR, which utilizes service E2R:

| $ORIGIN 7.6.5.4.3.2.1.0.4.8.5.3.e164.arpa | | | | | | |
|---|---|---|---|---|---|---|
| ;; | Order | Pref | Flag | Service | Regexp | Replacement |
| IN NAPTIR | 100 | 50 | "s" | "ns+E2R" | "" | _ns.users.current.domain |

When being queried about data for the number +358401234567, the DNS returns a name of the form SRV RR by means of which the querying name server can make a new DNS query of the SRV form to the user's correct (present) operator and query about name servers of the particular operator. It is assumed here that the SVR RR of the DNS also understands the "ns" protocol specifier.

The second example is from the NAPTR RR, which utilizes service E2D.

| $ORIGIN 7.6.5.4.3.2.1.0.4.8.5.3.e164.arpa | | | | | | |
|---|---|---|---|---|---|---|
| ;; | Order | Pref | Flag | Service | Regexp | Replacement |
| IN NAPTR | 100 | 50 | "p" | "ns+E2D" | "" | users.current.domain |

When being queried about data for the number +358401234567, the DNS returns a name by means of which the querying name server can make a new DNS query to the user's correct (present) operator and query about name servers of the particular operator. It is assumed here that the "ns" protocol specifier is known and can be utilized by the DNS.

Also means other than DNS queries between operations can be used for local number transfers. The following is an example of utilizing the LDAP. A lower priority has been given to the LDAP, compared with a DNS query, but a local name server can be commanded to give a priority to the LDAP and not to the DNS. For example:

| $ORIGIN 7.6.5.4.3.2.1.0.4.8.5.3.e164.arpa | | | | | | |
|---|---|---|---|---|---|---|
| ;; | Order | Pref | Flag | Service | Regexp | Replacement |
| IN NAPTR | 10 | 50 | "p" | "ns+E2D" | "" | users.current.domain |
| IN NAPTR | 100 | 50 | "u" | "ldap+E2U" | "" | ldap://ldap.foo.com |

The DNS returns the LDAP address, and a new query can be made to the address to resolve the number.

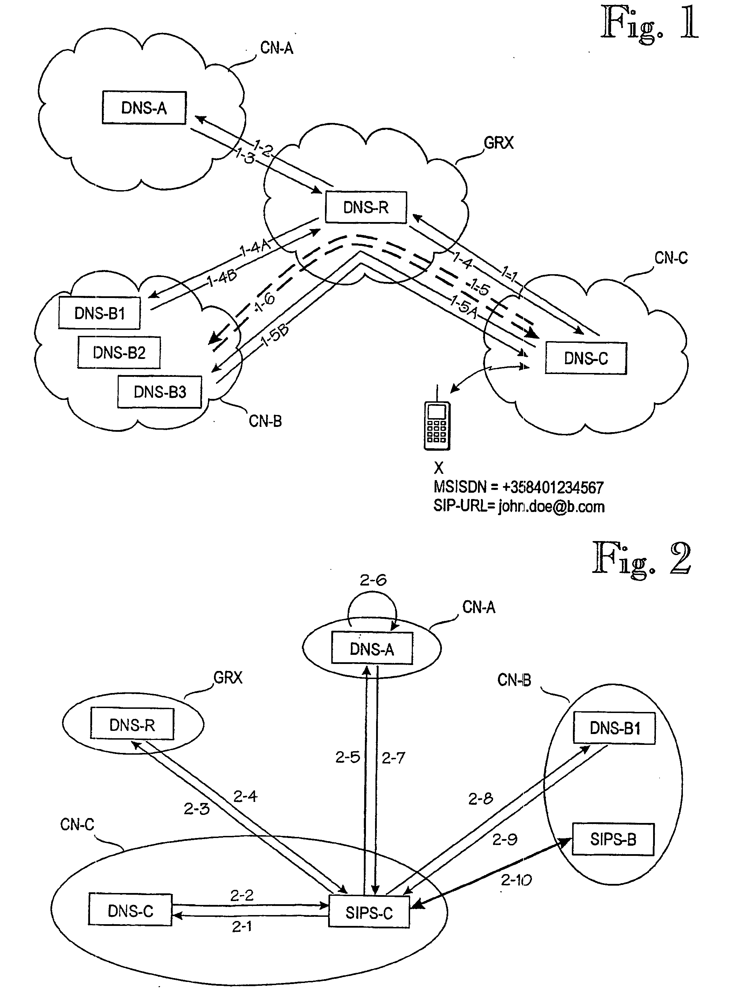

Figure 1 shows a concrete example of resolving an E.164 number and of the portability of the number in connection with roaming. Figure 1 shows a series of events in which subscriber X (whose MSISDN number is +358401234567) is originally operator A's (domain = a.com) client, so that X has a telephone number allocated from operator A's number space. Subscriber X has become operator B's (domain = b.com) client, but X's telephone number is still from the number space owned by operator A. In the case of Figure 1, subscriber X is roaming in operator C's (domain = c.com) network.

In step 1-1, operator C's name server DNS-C attempts to resolve subscriber X's SIP-URL with an Enum-DNS query, the SIP-URL being expressed as an E.164 number. Since the DNS-C does not know subscriber X's number, it routes the query to the root server DNS-R of the Interconnection network GRX. (Technically this takes place in the same way as the routing of the query to an ordinary name server.) The root server DNS-R identifies that X's number belongs to operator A on the basis of the prefix of the E.164 number. In other words, the number has been allocated from operator A's number space. Figure 1 is simplified in the sense that in reality there may be continent-specific, state-specific and operator-specific hierarchy levels between the root server and the operator's server, due to which the hierarchy of the name servers may be more complicated than what is shown in Figure 1. Figure 1 is, however, sufficient to illustrate principled operation of the invention.

In step 1-2, the root server DNS-R routes the DNS query to subscriber X's original operator A, because X's telephone number belongs to operator A's number space. In step 1-3, operator A's name server DNS-A observers from the NAPTR RR (see the above examples of NAPTR) that X is no longer A's client, but X's name service is attended to by another operator. The NAPTR returns either

a. _ns.b.com, whereby next an SRV name query is performed to b.com (flag == 's'), or

b. b.com, whereby next a name query is performed about name servers to b.com (flag == 'p').

In step 1-4, if no recursion is allowed in connection with the DNS query, the root server DNS-R returns the replies received in step 3 to C's name server DNS-C.

Steps 1-4A and 1-4B are performed only if recursion is allowed. In step 1-4A, the root server DNS-R queries B's (master) name server (here DNS-B1) about B's name servers, B's (master) name server being known to the root server DNS-R. In step 1-4B, the name server DNS-B1 returns a list of operator B's name servers to the root server. After this, the root server DNS-R returns a reply to C's name server DNS-C in step 1-4, but the DNS reply is now in a slightly different form.

In step 1-5, if the DNS-C now knows the name server addresses (DNS-B1 etc.) responsible for subscriber X's E.164 number, the DNS-C sends a query to one of B's name servers and receives from it the SIP-url it has requested.

In step 1-5A, if recursion is not allowed, C's name server DNS-C must still resolve b.com's name servers. In other words, the DNS-C queries about b.com's name servers. The DNS queries may again be transmitted through the root network DNS-R of the Interconnection network GRX.

In step 1-5B, one of b.com's name servers (or another name server on the path from C to B, which knows B's name servers), returns a list of b.com's name servers to C's name server DNS-C. After this, the operation continues in accordance with steps 1-5 and 1-6.

In step 1-6, B's name server DNS-B resolves subscriber X's E.164 number and returns the SIP-url or the like. After this, all name queries from C to B proceed directly without passing through A until the name data stored by B expires.

Figure 2 shows a second chain of events, which contains not only name servers but also two SIP servers, namely an SIPS-C in the visited network C and an SIPS-B in the subscriber's present home network. In step 2-1, the SIPS-C sends a query about the subscriber's SIP-URL to the DNS-C. In step 2-2, the DNS-C returns the ns message presented previously in connection with extensions of the NAPTR protocol, on the basis of which ns message the SIPS-C can direct the query to the route server DNS-R in step 2-3. In step 2-4, the DNS-R returns the ns message, on the basis of which the query is directed in step 2-5 to the name server DNS-A of the original network A. In step 2-6, the DNS-A observes that the subscriber is now operator B's client, and in step 2-7 it returns the extension SRV RR or NS of the NAPTR protocol presented previously, on the basis of which the SPIS-C knows the domain address of the subscriber's present operator. On the basis of this information, the SIPS-C queries the DNS-B1 in step 2-8 about the corresponding SIP server SIPS-B in operator B's network. In step 2-9, the DNS-B1 returns the SIPS-B's IP address (or SRV or NS message). On the basis of this information, traffic of the form TCP or UDP can, in step 2-10, be started between the SIP servers SIPS-C and SIPS-B.

An essential idea of the invention is that the name server of the operator owning the original number (in Figure 1 operator A) can transmit the name queries further to the new operator's name servers. There is no need to make any changes in the DNS hierarchy itself, and the name queries always find their way to the subscriber's new operator.

In practice, the name servers keep the queries and their results in the cache, so that a complete query shown in Figure 1 is made only once, after which the next queries concerning the same E.164 number are replied by the closest name server until the name data stored in the cache expires (i.e. the lifetime defined for the data terminates). The expiration of the name data is determined by the name server in which the original data has been stored.

Although the connections in Figure 2 are drawn directly between the servers, in practice all traffic always travels through the core network.

Depending on whether the recursion is allowed or not, the replies of the intermediate steps to the DNS queries may always be returned to the name server that has made the original query. In other words, if no recursion is allowed, the name server DNS-C of operator C of Figure 1 always receives a reply from each intermediate step and makes thus as many new DNS queries as is required to find B's name servers. If, on the other hand, recursion is allowed, operator C makes in Figure 1 one DNS query and receives directly operator B's all name server addresses as a reply.

The above description contains some embodiments of the invention, but the invention is not confined to them. For instance, the first form of the subscriber ID may be E.212 instead of E.164. Correspondingly, the second form of the subscriber ID may be SIP, FQDN, e-mail, URL, URI, NAI, or any other unambiguous domain name. Otherwise as well, it is obvious to a person skilled in the art that as the technology advances, the basic idea of the invention can be implemented in a plurality of ways. The invention and its embodiments are thus not limited to the above examples but can vary within the scope of the claims.

### Abbreviations:

3GPP = Third Generation Partnership Project
ARPA = Address and Routing Parameters Area
DNS = domain name server/service
Enum = E.164 (E.212) number and DNS
FQDN = Fully Qualified Domain Name
GRX = GPRS Roaming Exchange
LDAP = Light Directory Access Protocol
NAPTR = Naming Authority Pointer
SIP = Session Initiation Protocol
SRV RR = Service Resource Record
URI, URL = Uniform Resource Identifier/Locator

## Claims

1. A method for mapping a subscriber ID relating to a subscriber (X) from a first form to a second form when the subscriber ID in the first form has been allocated from the ID space of a first network (A) and the subscriber is a subscriber of a second network (B) and roaming in a third network (C); and when each network comprises at least one name server (DNS-A ... DNS-C) and the operators' networks are connected by a core network (GRX) having a root server (DNS-R);
wherein
the server (DNS-C, SIPS-C) of the third network receiving a query concerning the second form of the subscriber ID, and the query containing or expressing the first form of the subscriber ID;
the server of the third network sending a query concerning the second form of the subscriber ID to the root server (DNS-R);
the root server (DNS-R) deducing the name server (DNS-A) of the first network from the first form of the subscriber ID and starting a process which results in the query concerning the second form of the subscriber ID being transmitted to the name server (DNS-A) of the first network;
the name server (DNS-A) of the first network starting a process which results in at least the domain address of the second network being transmitted to the name server (DNS-C) of the third network;
the name server (DNS-C) of the third network sending a query to the name server (DNS-B) of the second network on the basis of the domain address of the second network and receiving a subscriber ID of the second form from the name server of the second network.

2. A method according to claim 1, **characterized by** the first form of the subscriber ID being E.164 or E.212.

3. A method according to claim 1 and 2, **characterized by** the second form of the subscriber ID being SIP-URL.

4. A name server (DNS-A) of a first telecommunications network (CN-A), arranged to receive a query (1-2; 2-5) which contains or expresses a first form of a subscriber ID, and to reply to the query by informing a subscriber ID of a second form (1-3; 2-7);
wherein the name server is arranged
- to detect whether the subscriber ID relates to a subscriber who has been the subscriber of the first telecommunications network (CN-A) but has become a subscriber of a second telecommunications network (CN-B), and that the query was sent from a third telecommunications network (CN-C); and
- as a response to the query and the detection to start a process which results in at least the domain address of the second network (CN-B) being transmitted to the sender (DNS-C, SIPS-C) of the query;
whereby traffic (2-10) can be transmitted directly between the third telecommunications network (CN-C) and the second telecommunications network (CN-B).

## Patentansprüche

1. Verfahren zum Abbilden einer Teilnehmerkennung, die sich auf einen Teilnehmer (X) bezieht, von einer ersten Form zu einer zweiten Form, wenn die Teilnehmerkennung in der ersten Form von dem Kennungsraum eines ersten Netzes (A) zugewiesen worden ist und der Teilnehmer ein Teilnehmer eines zweiten Netzes (B) ist und in einem dritten Netz (C) wandert; und wenn jedes Netz mindestens einen Namenserver (DNS-A ... DNS-C) aufweist und die Betreibernetze durch ein Kernnetz (GRX) verbunden sind, das einen Rootserver (DNS-R);
wobei
der Server (DNS-C, SIPS-C) des dritten Netzes eine Anfrage, die die zweite Form der Teilnehmerkennung betrifft, empfängt und die Anfrage die erste Form der Teilnehmerkennung enthält oder ausdrückt;
der Server des dritten Netzes eine Anfrage, die die zweite Form der Teilnehmerkennung betrifft, zu dem Rootserver (DNS-R) sendet;
der Rootserver (DNS-R) den Namenserver (DNS-A) des ersten Netzes aus der ersten Form der Teilnehmerkennung ableitet und ein Verfahren startet, welches zu der Anfrage führt, die die zweite Form der Teilnehmerkennung betrifft, die zu dem Namenserver (DNS-A) des ersten Netzes gesendet wird;
der Namenserver (DNS-A) des ersten Netzes ein Verfahren startet, welches dazu führt, daß mindestens die Domänenadresse des zweiten Netzes zu dem Namenserver (DNS-C) des dritten Netzes gesendet wird;
der Namenserver (DNS-C) des dritten Netzes eine Anfrage zu dem Namenserver (DNS-B) des zweiten Netzes auf der Grundlage der Domänenadresse des zweiten Netzes sendet und eine Teilnehmerkennung der zweiten Form von dem Namenserver des zweiten Netzes empfängt.

2. Verfahren nach Anspruch 1, ***dadurch gekennzeichnet, daß*** die erste Form der Teilnehmerkennung E.164 oder E.212 ist.

3. Verfahren nach Anspruch 1 oder 2, ***dadurch gekennzeichnet, daß*** die zweite Form der Teilnehmerkennung SIP-URL ist.

4. Namenserver (DNS-A) eines Telekommunikationsnetzes (CN-A), der derart aufgebaut ist, daß er eine Anfrage (1-2; 2-5) empfängt, welche eine erste Form einer Teilnehmerkennung enthält oder ausdrückt und auf die Anfrage durch Unterrichten einer Teilnehmerkennung einer zweiten Form (1-3; 2-7) antwortet;
wobei
der Namenserver derart aufgebaut ist, daß er
- erfaßt, ob sich die Teilnehmerkennung auf einen Teilnehmer bezieht, der der Teilnehmer des ersten Telekommunikationsnetzes (CN-A) gewesen ist, aber ein Teilnehmer des zweiten Telekommunikationsnetzes (CN-B) geworden ist, und daß die Anfrage von einem dritten Telekommunikationsnetz (CN-C) gesendet worden ist; und
- als Reaktion auf die Anfrage und das Erfassen ein Verfahren startet, welches dazu führt, daß mindestens die Domänenadresse des zweiten Netzes (CN-B) zu dem Sender (DNS-C, SIPS-C) gesendet wird;
wodurch der Verkehr (2-10) direkt zwischen dem dritten Telekommunikationsnetz (CN-C) und dem zweiten Telekommunkationsnetz (CN-B) gesendet werden kann.

## Revendications

1. Procédé de mappage d'une identification d'abonné concernant un abonné (X) d'une première forme à une deuxième forme lorsque l'identification de l'abonné dans la première forme a été attribuée depuis l'espace d'identification d'un premier réseau (A) et l'abonné est un abonné d'un deuxième réseau (B) et visite un troisième réseau (C) ; et lorsque chaque réseau comprend au moins un serveur de noms (DNS-A... DNS-C) et les réseaux des opérateurs sont raccordés par un réseau coeur (GRX) comprenant un serveur racine (DNS-R) ;
dans lequel
le serveur (DNS-C, SIPS-C) du troisième réseau recevant une requête concernant la deuxième forme de l'identification de l'abonné, et la requête contenant ou exprimant la première forme de l'identification d'abonné ;
le serveur du troisième réseau envoyant une requête concernant la deuxième forme de l'identification de l'abonné au serveur racine (DNS-R) ;
le serveur racine (DNS-R) déduisant le serveur de noms (DNS-A) du premier réseau à partir de la première forme de l'identification de l'abonné et démarrant un procédé qui a pour résultat que la requête concernant la deuxième forme de l'identification de l'abonné est transmise au serveur de noms (DNS-A) du premier réseau ;
le serveur de noms (DNS-A) du premier réseau démarrant un procédé qui a pour résultat qu'au moins l'adresse de domaine du deuxième réseau est transmise au serveur de noms (DNS-C) du troisième réseau ;
le serveur de noms (DNS-C) du troisième réseau envoyant une requête au serveur de noms (DNS-B) du deuxième réseau sur la base de l'adresse de domaine du deuxième réseau et recevant une identification d'un abonné de la deuxième forme depuis le serveur de noms du deuxième réseau.

2. Procédé selon la revendication 1, **caractérisé en ce que** la première forme de l'identification de l'abonné est E.164 ou E.212.

3. Procédé selon la revendication 1 ou 2, **caractérisé en ce que** la deuxième forme de l'identification de l'abonné est SIP-URL.

4. Serveur de noms (DNS-A) d'un premier réseau de télécommunications (CN-A), agencé pour recevoir une requête (1-2 ; 2-5) qui contient ou exprime une première forme d'une identification d'abonné et pour répondre à la requête en informant une identification d'abonné d'une deuxième forme (1-3, 2-7) ;
dans lequel le serveur de noms est agencé
pour détecter si l'identification de l'abonné concerne un abonné qui a été l'abonné d'un premier réseau de télécommunications (CN-A) mais est devenu un abonné d'un deuxième réseau de télécommunications (CN-B), et si la requête a été envoyée depuis un troisième réseau de télécommunications (CN-C) ; et
en réponse à la requête et la détection pour démarrer un procédé qui a pour résultat qu'au moins l'adresse de domaine du deuxième réseau (CN-B) est transmise à l'expéditeur (DNS-C, SIPS-C) de la requête ;
moyennant quoi un trafic (2-10) peut être transmis directement entre le troisième réseau de télécommunications (CN-C) et le deuxième réseau de télécommunications (CN-B).
